# EUROPEAN PATENT SPECIFICATION

(11) **EP 1 098 388 B1**
(45) Date of publication and mention of the grant of the patent: **23.02.2005**
(21) Application number: 99121793.6
(22) Date of filing: 03.11.1999
(51) Int. Cl.: H01Q 1/24, H04B 1/38, H04M 1/02

(54) **Portable radio communication device, such as a portable telephone provided with protective shielding**
Tragbares Funkgerät, wie Mobiltelefon, ausgestattet mit Schutzabschirmung
Appareil de communication radio portable comme téléphone mobile à écran de protection

(43) Date of publication of application: 09.05.2001
(60) Divisional application: 00128152.6
(73) Proprietor: Q-Free MagCom AS, 1366 Lysaker (NO)
(72) Inventor: STENE, Henning, 0286 Oslo (NO); SÖRENSEN, Inge, 0264 Oslo (NO); SVEDBERG, Martin, 1363 Hövik (NO)
(74) Representative: Niederkofler, Oswald A., Dipl.-Phys.

(56) References cited:
- EP-A- 0 367 611
- EP-A- 0 871 236
- EP-A- 0 928 092
- WO-A-97/26713
- WO-A-97/36380
- WO-A-97/41717
- WO-A-99/40769
- WO-A-99/43040
- WO-A-99/60660
- DE-A- 4 319 965
- FR-A- 2 761 559
- GB-A- 2 330 979
- US-A- 5 513 996
- US-A- 5 923 751
- PATENT ABSTRACTS OF JAPAN vol. 1999, no. 05 31 May 1999 & JP 11 041 330 A (NAOE HIROSHI) 12 February 1999

## Description

The present invention relates to a portable radio communication device, and more particularly, to the protective RF (radio frequency) shielding of a portable telephone which reduces radiation exposure to the user's body when the telephone is in use.

### BACKGROUND OF THE INVENTION

Portable radio communication devices, such as mobile or cellular telephones, are widely used at present. Since introduction the cellular industry has succeeded in greatly reducing the size and weight of hand-held portable telephones. Also the performance of portable telephones has been greatly improved and functionality has been greatly expanded. However, the potential problem of interaction between the user's body and the electromagnetic radiation of the portable telephone have remained basically the same. Radio transmissions normally take place from an unipole aerial or antenna usually located on the top of the housing of the device. Further radiation is also emitted from the body of the device normally fabricated from a synthetic material, which is substantially transparent to electromagnetic radiation at the frequencies commonly used by portable telephones. With the reduction of the size of modern compact portable telephones, the irradiation of the user, in particular of the brain and the nerve tissues, and consequently the potential risk of health hazards has become even greater as the distance between the antenna and the head of the user has been further reduced.

To minimise energy absorption to the user's body is not only an issue of achieving compliance with safety limits. The influence on the radiation efficiency of the antenna and therefore the efficient use of the portable telephone must also be considered. Most of the presently available portable telephones do not meet both requirements of excellent radiation efficiency and a compact low radiation emitting design of the device.

For example, from WO 94/18817 a device for radio communication comprising a shield which under operating conditions is moved between the antenna means and the user is known. The shield has the form of a separate covering plate which is movably connected with the housing of the portable telephone, such as by a hinge or by transversally guiding means. When in use, the cover shield is moved from its lower position to its upper shielding position to be located between the user's head and the radiating section of the antenna arranged above the housing of the portable telephone. Although the electromagnetic irradiation of the user from the antenna is reduced the design of such a portable telephone is costly due to the use of a separate electromagnetic shielding means.

Another known approach consists in covering or encapsulating the antenna of a portable telephone located above the housing of the telephone by a separate shielding device. Examples for this shielding technique are disclosed in the US 5,550,525 or in the US 5,777,586.

According to a further example known from EP 0 915 572 Al, a portable telephone may be put into a separate case being made from a material of high attenuation of the radiation from the aerial of the portable telephone.

GB-A-2 330 979 discloses a mobile telephone comprising a radiation shield which is shiftably or rotatably connected to the housing of the mobile telephone. A speaker may be located on the radiation shield. The radiation shield of mobile from a non-conducting material comprising a electrically conducting layer.

### SUMMARY OF THE INVENTION

It is, therefore, an object of the present invention to provide a portable radio communication device, in particular a portable telephone, having a compact design and at the same time reducing the electromagnetic radiation exposure to the user's body.

To this end, according to one aspect, the invention is directed to a portable radio communication device according to the subject-matter of independent claim 1. In this way the housing itself is used as a radiation shield against the magnetic or electromagnetic radiation emitted by the antenna of radio communication device. Interaction with the user's body is prevented by placing at least part of the conductive housing between the user and the antenna when the portable radio communication device is in an operative mode. This reduces the influence of the user's body on the antenna radiation thereby improving the antenna radiation efficiency and furthermore reduces the risk of potential radiation health hazard to the user's body. The excellent radiation efficiency due to the RF shielding characteristic of the housing of the inventive portable telephone does provide considerable technical advantages, such as reduced transmitting power, smaller and lighter batteries, longer speech time, etc..

The arrangement of the antenna according to the invention provides new alternatives for the design of the device and, at the same time, a significant increase in performance. The exposure to the user's body can be reduced by mounting an antenna behind or onto the back side of a portable telephone housing, when the telephone is in use.

Preferred embodiments of the invention are described in the depending claims.

The RF shielding effect of the housing can in principle be obtained by reflecting and/or redirecting a part of the electromagnetic radiation of the antenna to flow into open space in a direction away from the user's body. According to the invention the housing of the portable communication device is configured to act as a radiation reflective element. Recent scientific studies have shown that the design goal for mobile telephones of improved radiation efficiency is to minimise the maximum incident magnetic field on the user's head. The present inventors have found that, when an antenna is reflectively coupled with the shielding housing of the device, all performance parameters could be considerably improved compared to standard configurations. Inductive coupling may be key factor because of the high permeability of living tissue to radiation. Of course, the configuration of the housing acting a reflecting element and the separation between the reflective element and the antenna may be varied. The housing at least partly defines with the antenna an angle, when the portable communication device is in an operative mode, wherein the angle defining a predetermined pattern of reception and radiation of the antenna. The reduction of the electromagnetic radiation in a direction towards the user's head is a function of this angle. The maximum field strength incident on the user's head decreases with decreasing values of this angle. Effective radiation efficiency emitted in a direction away from the user's head shows a very significant improvement as compared to the operation without the shielding protection according to the invention. Furthermore, in order to additionally influence the directivity of the radiation emitted by the antenna to the outside space preferably a directive means may be included in the housing of the portable communication device. As will be apparent for the skilled person, the reflection and redirection property of the housing may affect the antenna radiation and must be taken into account in the design of the antenna, for example by a reflectively coupled dipol.

The housing of the portable communication device is made from an electrically conductive material, such as metal, e.g. aluminium, magnesium, titanium or alloys thereof. The electrially conductive housing may preferably be connected to the electrical ground of the portable communication device.

In a further preferred embodiment of the portable radio communication device at least part of the housing is surrounding electronic components included in the communication device. Preferably, in addition one or more shielding layers are incorporated in said housing near the electronic components in order to protect the electronic components against magnetic and electromagnetic influence or emittance of electromagnetic signals to the outside. Any opening in the housing may preferably sealed by an appropriate shielding plug providing protection against electromagnetic influence from or emittance to the outside.

According to another aspect of the invention, the housing of the portable radio communication device comprises a sandwich structure with an inner casing, an outer casing and at least one intermediate chassis. Preferably the inner casing and/or the outer casing are interconnected with the intermediate chassis by a flexible locking mechanism, said intermediate chassis comprising at least one aperture containing a flexible portion and said inner and/or outer casings comprising a at least one respective extending part to be inserted and pushed into said aperture and at the same time pivoting the inner and/or outer casings against the intermediate chassis such that said locking protrusion on the intermediate chassis may be positioned in said corresponding locking aperture on the inner and/or outer casings.

In accordance with another aspect of the present invention the portable radio communication has a housing, said housing defining at least partially a substantially planar supporting surface comprising frictional supporting means for supporting said portable radio communication device when, for example, located on a desk or mounted in a docking station, such as a charging station or a personal computer docking station. Preferably the supporting means are made from highly frictional and flexible material, such as synthetic or natural rubber or any artificial elastomeric material and preferably containing electrically conductive elements for providing additional electromagnetic shielding.

Still another aspect of the present invention refers to a portable radio communication device comprising at least two housing parts, wherein said housing parts are rotatably connected to each other by a hinge, allowing said housing parts to be moved between a first or resting position and a second or operating position wherein the rotating connection is such that the housing parts may be positioned and maintained in at least one further position or any position between the first and second positions. Preferably a display is occupying the second housing part for the most part thereof.

### BRIEF DESCRIPTION OF THE DRAWINGS

Further features and advantages of the present invention will be apparent upon review of the following description of preferred embodiments of the present invention with reference to the accompanying drawings, in which:
Fig. 1 is a perspective view of a preferred portable telephone embodying the present invention in an open position;
Figs. 2 a), b) and c) show the portable telephone of Fig. 1 in bottom view (Fig. 2a), side view (Fig. 2b) and top view (Fig. 2c) in a closed position;
Figs. 3 a) and b) show the portable telephone of Fig. 1 in top view (Fig. 3a) and side view (Fig. 3b) in an open position;
Fig. 4 is an exploded view of an output section of the portable telephone according to Fig. 1;
Figs. 5 a) and b) show exploded views of an input section of the portable telephone according to Fig. 1;
Fig. 6 is a partial cross sectional view of the input section of the portable telephone according to Fig. 5;
Fig. 7 is a cut-away perspective view of the output section of the portable telephone according to Fig. 1;
Fig. 8 is an enlarged perspective view of a hinge connection between the input and output sections of the portable telephone of Fig. 1; and
Figs. 9 a), b) and c) show the hinge operation wherein the output section of the portable telephone is positioned in three different angles.

Before explaining embodiments of the invention in connection with a portable or mobile telephone in detail it is to be understood that the invention is not limited in its application to the details of construction and the arrangement of the components set forth in the following description or illustrated in the drawings. The invention is capable of including other embodiments or being carried out for similar portable radio communication devices emitting electromagnetic radiation. Also, it is to be understood that the phraseology and terminology employed herein are for the purpose of description and should not be regarded as limiting.

### DETAILED DESCRIPTION OF THE PREFERRED EMBODIMENTS

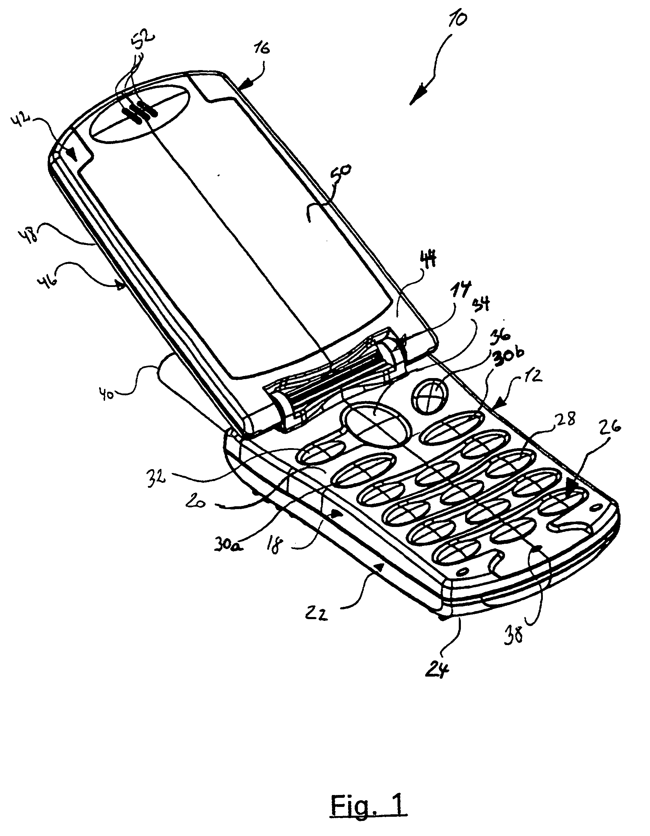

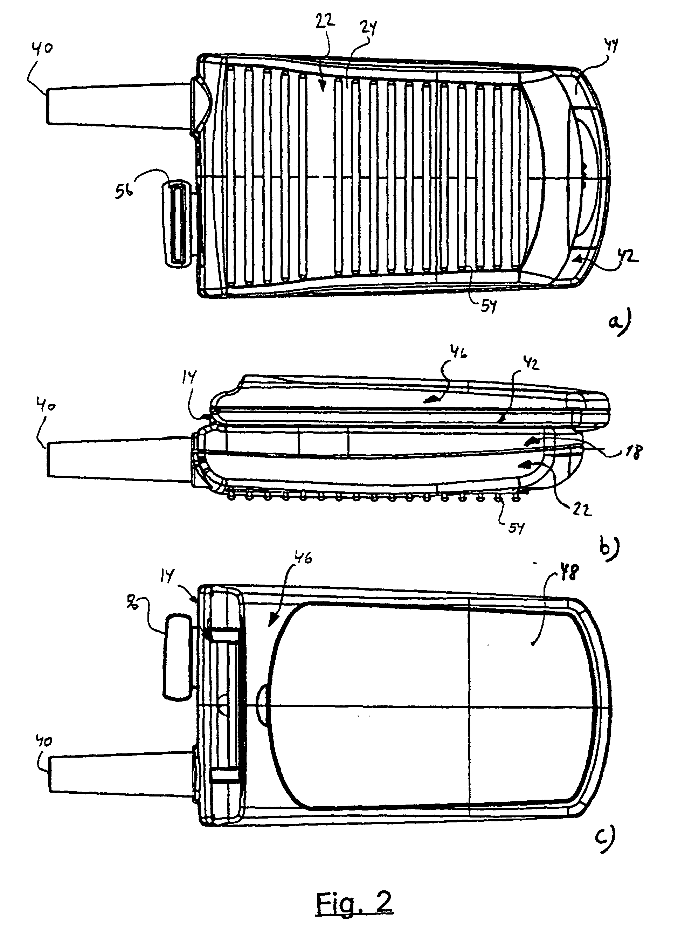

A portable or mobile telephone according to a preferred embodiment of the present invention shown in Fig. 1 designated in its entirety by numeral 10 comprises an input housing section 12 connected through a hinge 14 to an output housing section 16. The hinge 14 enables a rotation of the input housing section 12 and the output housing section 16 from an open or operating position of the portable telephone 10 (see Fig. 1) allowing operation of the input housing section 12 to a closed or resting position of the portable telephone 10 (see Fig. 2) disallowing operation of the input housing section 12. Thus the hinge 14 provides means for folding the portable telephone 10 thereby reducing the length of the portable telephone 10 and improving its compactness. Both the input and output housing sections 12, 16 are made from an electrically conductive material in order to shield nearby body parts of the user of the portable telephone 10 from electromagnet radiation emitted by the phone 10 or at least reduce irradiation of the user.

The input housing section 12 comprises an inner part 18 having an inner surface 20 accessible for an user of the portable telephone 10 when the portable telephone 10 is in an open position and not accessible for the user of the portable telephone 10 when the portable telephone 10 is in a closed position. The input housing section 12 further comprises an outer part 22 having an outer supporting surface 24 (not visible in Fig. 1) displaced parallel to the inner surface 20. The outer supporting surface 24 of the outer part 22 defines a basically planar surface for supporting the portable telephone 10 for example on a table or in the user's hand.

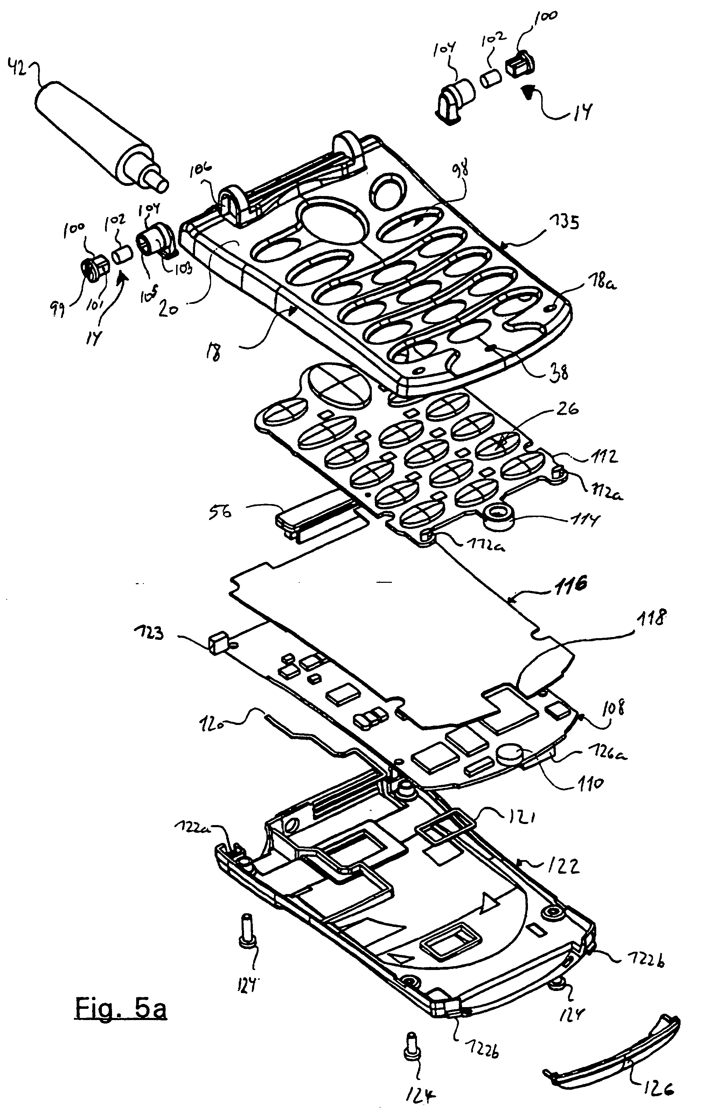

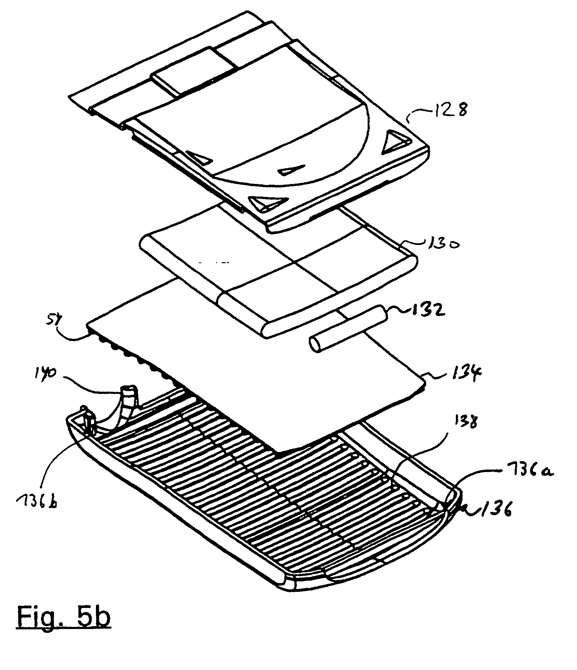

A keypad designated in its entirety by numeral 26 is positioned on the inner surface 20 of the inner part 18. The keypad 26 provides means for operating the portable telephone 10 to perform various tasks such as for example dialling a phone number, writing, deleting, sending or reading messages, writing, reading or removing addresses from the address book, or toggling through various menus. The keypad 26 preferably comprises twelve digit and letter keys 28, menu function keys 32, a selection or enter key 30a and a cancel key 30b, arrow keys 34 and an ON/OFF function key 36. The inner surface 20 of the inner part 18 of the input housing section 12 further includes an opening or a hole 38 for establishing acoustic communicating with a microphone 110 placed beneath the hole 38 and shown in Fig. 5a.

The antenna of the portable telephone 10 may be in the form of an aerial 40 being supported at and extending from the upper face of the input housing section 12 of the portable telephone 10. The aerial 40 transmits electromagnetic signals to and receives electromagnetic signals from telecommunication stations collecting and distributing telecommunication signals, such as telephone calls, messages, information data, etc., between, portable telephones or between portable telephones and standard fixed telephones and any other radio communication systems, such as a global computer network like the Internet.

The aerial 40 may be of a helix type antenna or have a dipole configuration.

The output housing section 16 includes an inner part 42 having an inner surface 44 accessible for the user of the portable telephone 10 when the portable telephone 10 is in an open position (see Fig. 1) and not accessible for the user of the portable telephone 10 when the portable telephone 10 is in a closed position (see Fig. 2). The output housing section 16 further includes an outer part 46 having an outer surface 48 (not visible in Fig. 1) substantially parallel to the inner surface 44 of the inner part 42. The outer surface 48 and the outer supporting surface 24 provide a protecting cover for the inner surfaces 18 and 44 when the portable telephone 10 is in a closed position.

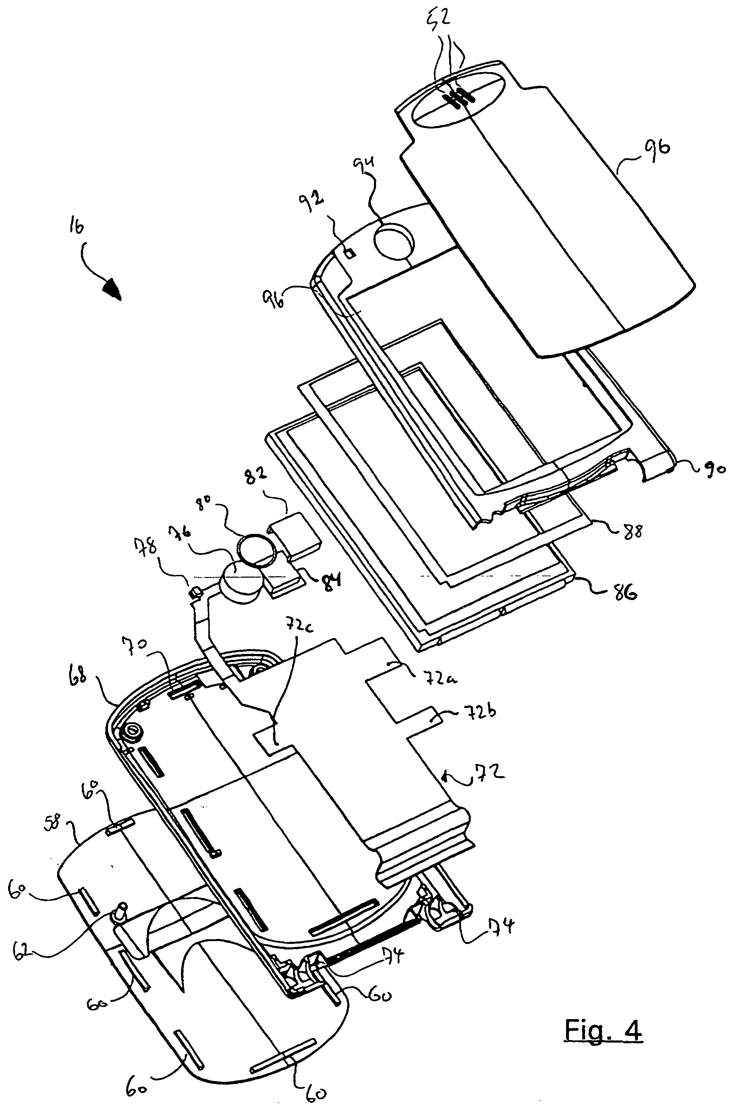

A large display section 50 is positioned on the inner surface 44 of the output housing section 16 including display menus such as for example an operation menu for the portable telephone 10. The display section 50 may consist of a liquid crystal display (LCD) or any similar semi-conducting type of display and enables the user of the portable telephone 10 to select any preferred menu listed on the display section 50 by moving a cursor by pressing the arrow keys 34 and choosing a menu by pressing the selection key 32. The output housing section 16 further includes a loudspeaker 76 placed beneath a series of slots 52, as shown in Fig. 4. These slots 52 establish an acoustic communication to the user's ear.

Figs. 2 a), b) and c) show the portable telephone 10 in a closed position in bottom, side and top views, respectively. On the backside of the input housing section 12 a series of rubber sections 54 protrude through the outer supporting surface 24 and provide a flexible and stable surface for the portable telephone 10 while for example lying on a table or in the user's hand. The rubber sections 54 may be formed by drawing elevated and profiled extensions of a rubber mat 134 placed on the inner side of the outer part 22 through slits provided in the outer supporting surface 24 by applying a vacuum to the outer supporting surface 24 of the outer part 22. The profile of the rubber sections 54, shown as mushroom like in Fig. 2, may alternatively have square, rectangular, triangular, semi-circular, circular, semi-elliptic, elliptic profile shapes or any combinations thereof. Furthermore the rubber sections 54 are not limited to form parallel lines perpendicular to the longitudinal direction of the portable telephone 10 on the outer surface 24 but may alternatively have any web configuration, such as S-, C-, V-, O-, W-, X-, H-, D-, Z-, T- or Y-configuration or any combination thereof, and having any rotation or angle relative to the longitudinal direction of the portable telephone 10. The rubber sections 54 are preferably manufactured from a synthetic or natural rubber material. Preferably the rubber material comprises silicon and carbon. By introducing silicon and carbon into the rubber mat 134 additional electromagnetic shielding protection of the input housing section 12 is achieved. Hence the rubber mat 134 provides electromagnetic shielding from ambient electromagnetic noise as well as electromagnetic shielding to neighbouring electronic utilities from electromagnetic noise induced by the portable telephone 10. Further, the rubber mat 134 helps shielding the user's body from radiation emitted by the aerial 40 as well as the electronic components inside the housing. In addition the rubber section 54 provides a protection layer to protect the housing of the portable telephone 10 from mechanical and other environmental damage.

Additionally, the rubber sections 54 provide a soft frictional surface on the outer supporting surface 24 on the outer part 22 of the input housing section 12, which surface ensures that the portable telephone 10 is basically fixed in one position when, for example, placed on a table. Furthermore, the frictional surface ensures that the portable telephone 10 is stable during operation, i.e. the portable telephone 10 is level when, for example, placed on table while the set of keys 26 are pressed by the user. This feature ensures that the portable telephone 10 may be easily operated like any general electronic table equipment for office use, such as pocket computer, calculators or personal organisers.

Figs. 2 a) and b) also show a multipin terminal connector 56 for connecting the portable telephone 10 to transmit data from the telephone 10 to for example a personal computer or to transmit data from the telephone's 10 personal user card to external auxiliary equipment e.g. an external handset or a handfree set or a computer interface. The terminal connection may have any configuration, however, preferably the multipin terminal connector is a 15 pin female connection.

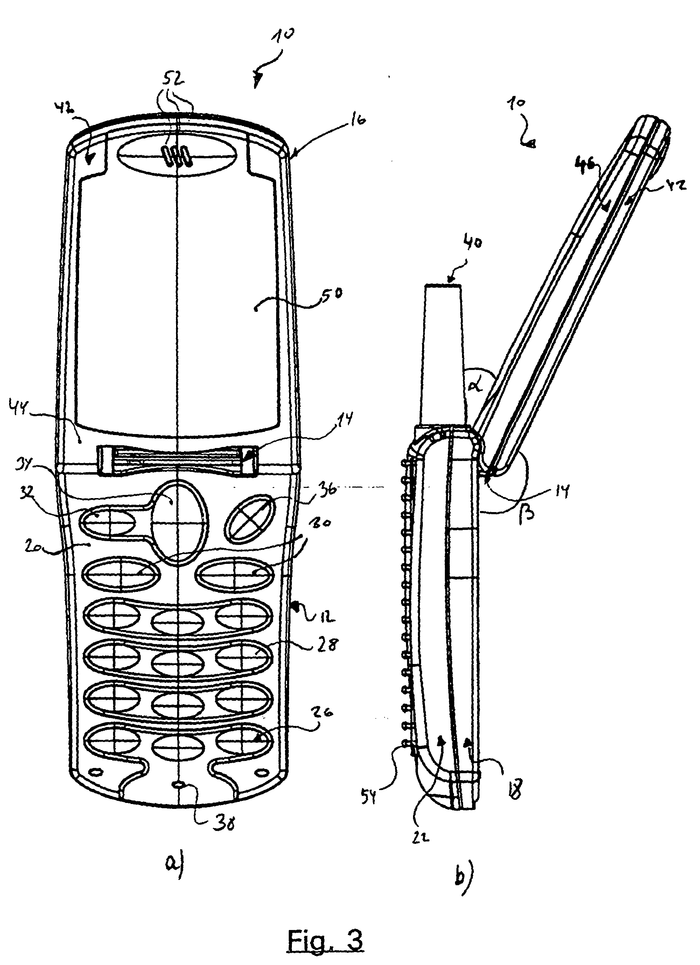

Figs. 3 a) and 3 b) show the portable telephone 10 in an open position in top and side views, respectively. According to Fig. 3 a) the display section 50 covers a predominant area of the inner surface 44 of the inner part 42 of the output housing section 16. Usually the display section 50 extends in the range of between 60% to 100% of the inner surface 44 such as ranges 60% to 80% or 65% to 75%. Preferably the display section 50 covers approximately 70% of the inner surface 44.

Furthermore Fig. 3 b) shows that, when the portable telephone 10 being in the open or operating mode, the aerial 40 is located behind the output housing section 16. The output housing section 16 located between the aerial and the user together with the input housing section 12 acts as an reflective shield for electromagnetic RF radiation emitted by the aerial 40 towards the user's head. Depending on the design of the output housing section 16 also an directional radiation pattern may be obtained. As will be discussed herein after, the material of the input and output housing sections 12, 16 is preferably a light weight and electrically conductive material, such as magnesium. When the portable telephone 10 being in use according to Fig. 3 b) part of radiation emitted by the aerial 40 is reflected by the conductive material of the housing, in particular the output housing section 16 of the telephone 10. Because of this arrangement the electromagnetic field incident on the user's body is minimised and hence the peak SAR (specific absorption rate) in the user's body is reduced. The radiation efficiency of the aerial 40 is also improved due to the lower power absorption in the user's body. Experiments on the portable phone 10 have shown that the reduction of radiation towards the head of the user depend on the angle α between the aerial 40 and the output housing section 16 in the operating position of the telephone 10: The radiation exposure of the user's body is reduced with decreasing values of α (or increasing values of the complementary angle β). Therefore, α is preferably of the order of 5°-65°, such as 15°-45°, preferably approximately 25° or within the range of 5°-15°, 15°-25°, 25°-35°, 35°-45°, 45°-55° or 55°-65°. On the opposite side into the open space in a direction away from of the user's head an improvement of the radiation efficiency in the order of at least 30% to 50% could be obtained under use of the shielding housing according to the present invention.

Further, it is to be noted that the housing of the portable telephone 10 provides magnetic and electromagnetic shielding against the radiation from the electronic components housed in the input and output housing section 12, 16 of the portable telephone 10.

Fig. 4 shows the output housing section 16 of the portable telephone 10 in exploded view. A flat rubber mat 58 constitutes a part of the outer surface 48 of the output housing section 16. The flat rubber mat 58 may be made from any synthetic or natural rubber material. However, the rubber mat 58 preferably includes silicon and carbon so as to provide additional electromagnetic shielding of the output housing section 16. The rubber mat 58 provides a soft frictional surface on the outer surface 48, which due to adhesive friction ensures that the portable telephone 10 becomes more stable for example during transportation in a pocket. Furthermore, the rubber mat 58 provides a protection layer to protect the housing of the portable telephone 10 from mechanical and other environmental damages.

The rubber mat 58 is fixed on the backside of an outer chassis 68 which includes a printed circuit board 72 and an overlying display 86 and a frame 88. All these components are covered by an inner chassis 90 comprising a transparent glass plate 96. Both the inner and outer chassis 68, 90 constitutes the output housing section 16. Bolts 62 are arranged within the output housing section 16 for holding the first printed circuit board 72, the display 86 and the frame 88 in a fixed position within the output housing section 16. Extensions 60 protrude from the rubber mat 58 and engage with corresponding receiving slits 70 in the outer chassis 68 for fixing the rubber mat 58 to the outer chassis 68.

The outer chassis 68 is manufactured from an electrically conductive material. Preferably, the outer chassis 68 is made in magnesium so as to provide an effective electromagnetic shield protecting the user during a telephone call from magnetic and electromagnetic emissions from the portable telephone 10 without causing deterioration of the emitted signal in a direction away from the user's head. Due to the reflector characteristic of the outer chassis 68, as discussed above, the radiation efficiency in a direction away from the user's head is improved. In addition, the magnesium outer chassis 68 provides an electromagnetic shield of the electronic components included in the output housing section 16 of the portable telephone 10. Finally, the magnesium outer chassis 68 is a light weight conducting material and therefor particularly useful in constructing portable phones.

In an alternative example, the antenna is not located on the input housing section 16 of the portable telephone 10, as shown in Figs. 1 to 3, but preferably formed as a planar antenna 40a integrated onto the backside of the output housing section 16 of the portable telephone 10, as indicated with dashed lines in Fig. 4, shielded by the outer chassis 68 and positioned away from the head of the user. The planar antenna 40a is mounted between the rubber mat 58 and the outer chassis 68 or completely inside the output housing section 16, e.g. on the inner side of the outer chassis 68, and communicates via an opening on the upper face side of the output housing section 16 with the outside space.

Additionally, on the end connected to the input housing section 12 the outer chassis 68 includes shoulder rests 74 for incorporation of the hinge 14 allowing the output housing section 16 and the input housing section 12 to rotate into an open position or a closed position.

The first printed circuit board 72 comprises the loudspeaker 76, a light sensitive sensor 78, and provides control signals to the display 86 for displaying menu functions to the user. The first printed circuit board 72 further comprises a buzzer 84 for emitting acoustic signals, a rubber gasket 82 for directing the signals and a rubber ring 80 for preventing acoustic short circuiting between the front and the back of the loudspeaker 76 and avoiding undesired noise from the loudspeaker 76 when the loudspeaker 76 is in its operating position within the output housing section 16 of the portable telephone 10.

The display 86 serves to display menu functions of the portable telephone 10 to the user, in particular for advanced telecommunication, for example, with the world wide web (www). The size of the display 86 ensures that the user at all times may read and work on received messages as well as read and work on out going messages. The light sensitive sensor 78 communicates a light intensity signal to the control unit of the display 86 so as to automatically adjust the back lightening of display 86 and keys 26 in accordance with the ambient light conditions thereby enabling optimum intensity of the display 86 and at the same time save power.

The inner chassis 90 comprises a substantially rectangular opening 96 for establishing a view of the display 86, a substantially rectangular opening 92 matching the dimension and shape of the light sensitive sensor 78 for receiving the light sensitive sensor 78 and establishing a path for the ambient light to the light sensitive sensor 78, and a substantially circular opening 94 matching the dimension and shape of the loudspeaker 76 for receiving the loudspeaker 76 and establishing communication of sound from the loudspeaker 76 to the surroundings. The frame 88 positioned between the display 86 and the inner chassis 90 separates the display 86 from the inner chassis 90 and filling out any tolerances between the inner and outer chassis 90, 68 and the display 86, and preventing that dust enters into the housing of the telephone 10, especially into the visible area of the display 86.

The inner chassis 90 is manufactured from a conductive material. Magnesium is preferred in the present invention since as described above. Firstly, the magnesium inner chassis 90 causing the weight of the portable telephone 10 to be very low; secondly the magnesium inner chassis 90 provides an electromagnetic shield against irradiation of the user's body during use of the telephone 10; and thirdly the magnesium inner chassis 90 provides an electromagnetic shield of the electronic components incorporated into the output housing section 16 of the portable telephone 10. Additionally the magnesium material of the output housing section 16 establishes an electromagnetic protection of electronic appliances as the magnetic and electromagnetic emission towards the user's head from the portable telephone 10 is reduced. Fingers 72a, 72b and 72c of the first circuit board 72 hold this first board in position and provide an electrical ground connection to the main conductive chassis parts 68 and 90 of the output housing section 16.

On the top of the output housing section 16 a plate of glass 96 or any other relevant transparent material including plastics materials covers the inner chassis 90 for protecting the display 86, the light sensitive sensor 78 and the loudspeaker 76 inside the housing.

According to Figs. 5 a) and b) the input housing section 12 comprises an inner casing 135 covering the keypad 26 which overlays a touch sensitive screen 116 followed by a second printed circuit board 108. An intermediate separation chassis 122 separates the inner casing 135 from an outer casing 136 of the input housing section 12. The outer casing 136 covers a rubber mat 134 and battery means for the portable telephone 10.

Fig. 5 a) shows the inner casing 135 of the input housing section 12 of the portable telephone 10 manufactured in a conducting material, preferably magnesium, ensuring shielding of the second printed circuit board 108 from electromagnetic noise generated either by external electric appliances or generated by the first printed circuit board 72 included in the output housing section 16 and ensuring that the weight of the phone is kept low. In addition, the inner casing 135 acts as a shield for magnetic and electromagnetic radiation of the aerial 40. The inner casing 135 comprises holes 98 for receiving the keys of the keypad 26 therein and the hole 38 for conducting sound from the surroundings to the microphone 110 placed on the second printed circuit board 108. Additionally the inner casing 135 comprises a recess section 106 for receiving the hinge 14.

The keypad 26 is incorporated on a silicon rubber plate 112 providing a flexible press sensation during operation of the keys, which press sensation has been shown to be of ergonomic and psychological importance for users stroking keys. The silicon rubber plate 112 further incorporates a housing 114 for the microphone 110 thereby ensuring that the microphone is fixed to a position just below the hole 38 on the inner part 18 of the input housing section 12. A key stroke from the user activating a key on the flexible silicon rubber plate 112 is registered through contact on the touch sensitive surface 116 and communicated to the second printed circuit board 108. The touch sensitive surface 116 includes a recess 118 for allowing the microphone 110 to be received in the housing 114 on the silicon rubber plate 112. The silicon rubber plate 112 is provided with protrusions 112a made from the same material for preventing direct contact between the inner part 18 of the input housing section 12 and the inner part 42 of the output housing section 16. Protrusions 112a extend through holes 18a of the inner casing 135 and contact the surface of the inner part 42 to establish a space between the two inner parts 18 and 42 when the output housing section is snapped into a locked position, as shown in Figure 2, to prevent wear-out and undesired noise of the inner parts 18 and 42

A first seal member 120 provides high frequency shielding of the second printed circuit board 108 from electromagnetic emissions of the aerial 42 and a second seal member 121 provides shielding of the aerial 42 from electromagnetic emissions from a crystal controlling the timing of the second printed circuit board 108.

The separation chassis 122, which may be manufactured in any suitable plastics or conductive material, provides separation of the inner part 18 and the outer part 22 of the input housing section 12 of the portable telephone 10. Preferably, the separation chassis 122 is made from magnesium or any other conductive material which is stiff enough to resist the pressure from the keypad. The magnesium chassis 122 also protects the electronic components of the printed circuit board 108 against electromagnetic influence or emittance of RF signals. Four locking bolts 124 ensures that the separation chassis 122 and is fixed to the inner part 18.

An end section 126 is engageable with one end of the separation chassis 122 and provides a window for an infrared communication port 126a installed on the back of the printed circuit board 108.

According to Fig. 5 a) a shielding plug 56 is provided to prevent RF emittance which is coupled back from the aerial 42 to the electronic components inside the input housing section 12. This shielding plug 56 also functions as protection against dust and humidity.

According to Fig. 5 b) a primary battery 130 is sandwiched between an fixed cover 128 and the rubber mat 134, all together included in the outer casing 136 which is manufactured from magnesium or any other conductive shielding material. An additional internal battery provides a power backup function of the rechargeable primary battery 130 and enables the portable telephone 10 even in case of a discharge primary battery to maintain some functions, such as the clock and special operation functions. As described above, the rubber mat 134 comprises profiled parallel extensions 54. During assembly of the portable telephone 10, the profiled extensions 54 are forced into corresponding slits 138 formed in the outer casing 136 so as to provide an outer frictional surface of the outer section 22. The outer casing 136 further includes a recess 140 for receiving the aerial 42.

For access to the battery 130 the outer casing 136 can easily be mounted at and demounted from the separation chassis 122. Locking means on both ends of the outer casing 136 and the chassis 122 are provided. On the upper end of the intermediate chassis 122 flexible portions 123, preferably made of rubber, are received into corresponding apertures 122a on the intermediate chassis 122 forming a part of the locking mechanism for the outer casing 136. When mounting the outer casing 136 at the chassis 122 the extending parts 136b on the outer casing 136 (see Fig. 5b) are inserted into the apertures 122a of the chassis 122 from the backside wherein the chassis 122 and the outer casing 136 forming an acute angle between each other. By pushing the outer casing 136 on its upper end against the chassis 122, i. e. pushing the extending parts 136b against the flexible portions 123, and at the same time pivoting the outer casing 136 against the chassis 122 the locking protrusions 122b at the opposed end of the chassis 122 may be aligned with corresponding locking apertures 136a at the outer casing 136 (see Fig. 5b). By reducing the pressure on the flexible portions 123 the locking protrusions 122b may be positioned and inserted into the locking apertures 136a so as to lock the outer casing 136 to the chassis 122. The outer casing 136 may be demounted from the chassis 122 by following the same steps but in reversed order.

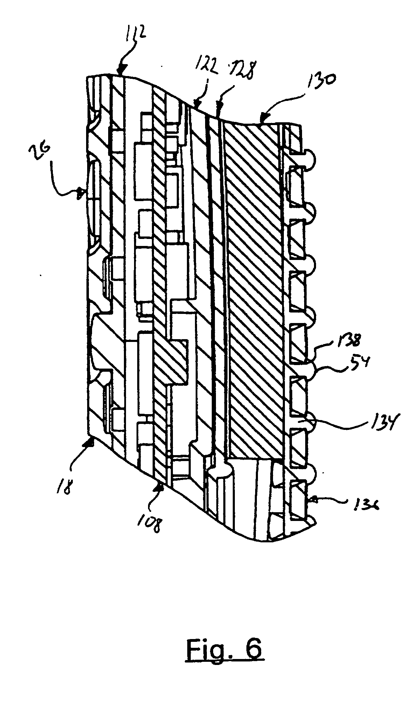

Fig. 6 shows a cross-sectional view of the input housing section 12 of the portable telephone 10. The profiled extensions 54 having mushroom profiles protrude through the slits 138 of the outer casing 136. By applying a vacuum to the outer surface of the outer casing 136 the profiled extension 54 are forced through the slits 138 and when in the final position are locked in position by the head of the mushroom profile. As can be seen in Fig. 6, the electronic components on the circuit board 108 are protected against electromagnetic influence from the outside and emittance to the outside by the adjacent separation chassis 122 and the surrounding housing parts, namely the inner case 135 and the outer casing 136 with rubber mat 134.

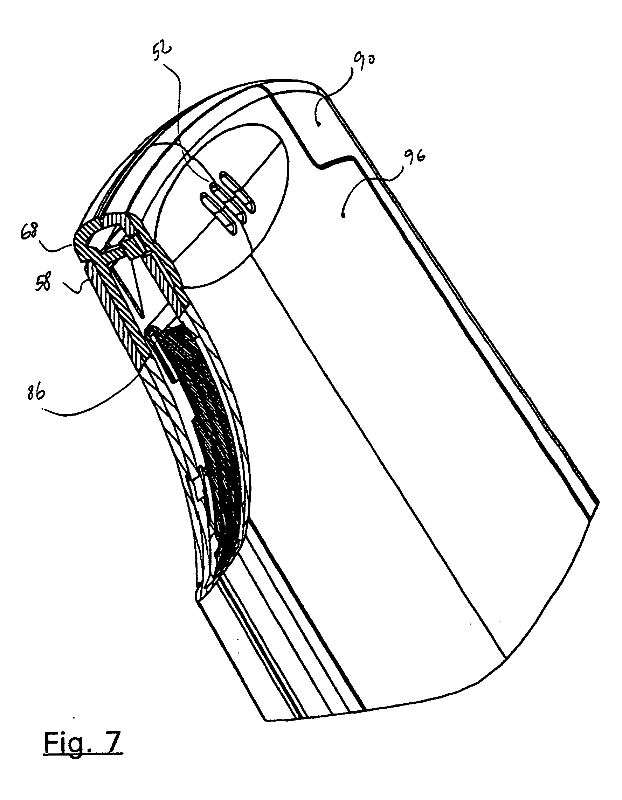

Fig. 7 shows a cut in the output housing section 16 providing an internal view of the output housing section 16.

As previously mentioned, the input and output housing sections 12, 16 are rotatably connected by the hinge 14. As can be seen in Fig. 5 a), the hinge 14 comprises two couplings 104, which couplings 104 having one end received in a respective recess 106 provided on the adjacent end of the inner casing 135 of the input housing section 12. The other end of the couplings 104 constitute a cylinder having an outer circular surface 103 and defining an inner rectangular space 105. The inner space 105 of the couplings 104 receives a elastic spacer 102 preferably being cylindrical and a plug 100 having one end with a rectangular section 101 matching the dimension and shape of the inner rectangular space 105. On the opposed end the plug 100 defines a notch 99.

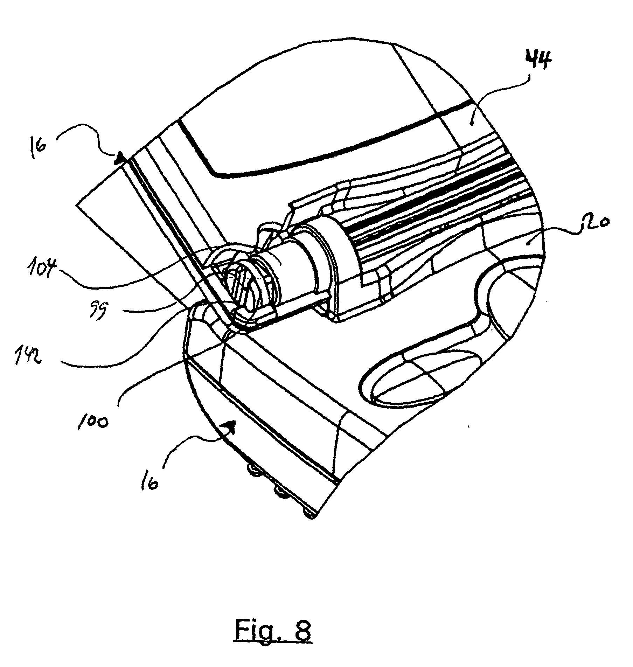

Fig. 8 shows in detail the hinge 14. As described above the hinge 14 comprises two couplings 104, two circular cylindrical elastic spacers 102 and two plugs 100 inserted inside the couplings 104 thereby providing a friction pressure between the plug 100 and the output housing section 16 of the portable telephone 10. The elastic spacer 102 being compressed and thereby establishing a pressure applied on the plug 100 versus the output housing section 16 of the portable telephone 10. The friction between each of the plugs 100 and the output housing section 16 of the portable telephone 10 ensures that a rotation of the input housing section 12 relative to the output housing section 16 may be fixed in any angle between the open or operating position and the closed position of the portable telephone 10. To ensure good readability of the display it is important to minimise reflections by rotation of the input housing section 12 relative to the output housing section 16 into the most favourable position in relation to surrounding light sources. This is especially important when the user is working on-line, e.g. connected to the world-wide web and having the device placed on the top of a desk. However, when the notch 99 provided on the outer face of the plug 100 falls in line with a matching protruding part 142 included in the output housing section 16, the output housing section 16 snaps into maximum open position or fully closed position.

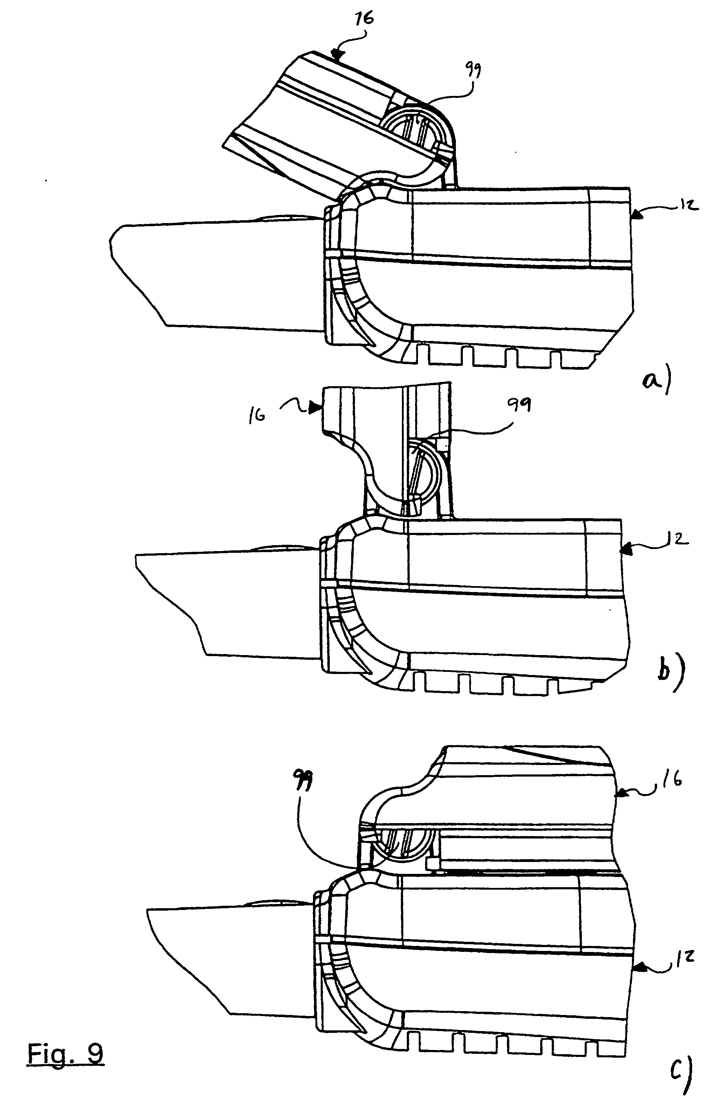

Fig. 9 a), b) and c) show alternative positions of the output housing section 16 relative to the input housing section 12 of the portable telephone 10. In Fig. 9 a) the output housing section 16 has snapped into the maximum open position in which position the output housing section 16 creates an angle of approximately 155° relative to the input housing section 12 of the portable telephone 10. The notch 99 is in this position pushed toward the matching protruding part 142 included in the output housing section 16 and falls in line therewith hence snapping the output housing section 16 into maximum open position and locking the output housing section 16 into maximum open position. In Fig. 9 b) the output housing section 16 is in an open position creating an angle of 90° relative to the input housing section 12 of the portable telephone 10. In this position the notch 99 is not in line with the protruding part 142 and therefor the output housing section 16 does not snap. In Fig. 9 c) the output housing section 16 has snapped into a closed position having the inner parts 44 and 20 of the input housing section and output housing section lay adjacent to each other and disallowing the user any access to the inner parts 44 and 20. Since the preferred maximum open position is 155° as opposed to 180° snapping into the maximum open position is controlled by one of the notches 99 provided in the hinge 14 and snapping into the closed position is controlled by the other of the notches 99.

## Claims

1. A portable radio communication device, such as a portable telephone (10), comprising an antenna (40), a speech transmitter (76), a speech receiver (110), a keypad (26) and display means (50), said radio communication device further comprising:
a housing including at least a first housing part (12), which houses the keypad (26) and the speech receiver (110) means; and a second housing part (16), which houses the speech transmitter (110) and the display means (50), wherein said first (12) and second housing parts (16) are rotatably connected through each other by a hinge (14) allowing said housing parts to be moved from a resting position in which said housing parts are basically covering each other and to an operating position in which said housing parts define an angle β,
wherein:
the entire housing (12, 16) is completely made from an electrically conductive material, and
said antenna (40) is located at said first housing part (12) such that, when said housing parts (12, 16) are moved in the operating position, the antenna (40) is placed behind said second housing part (16), and said hinge (14) comprises two couplings (104) each having an elastic spacer (102) and a plug (100) inserted inside the respective coupling (104) thereby providing a friction pressure between the plugs and the second housing part (16) enabling the second housing part (16) to be fixed in any angle β between the resting and the operating positions, the antenna (40) forms an angle α in a range of 5°-15°, 15°-25°, 25°-35°, 35°-45°, 45°-55° or 55°-65° with said second housing part (16) and the antenna (40) and the entire housing, acting as a reflecting element, provide a predetermined pattern of reception and radiation of the radio communication device, wherein the incident electromagnetic radiation toward the user's head is reducable with decreasing angle α.

2. The portable radio communication device according to claim 1, wherein said input means (26) are covered and protected by said second housing part (16) when said housing parts are in said resting position.

3. The portable radio communication device according to claim 1, wherein said housing comprises a protective layer (58) on its outer surface, said protective layer (58) is made from an electrically conductive synthetic resin, such as silicon or carbon reinforced rubber.

4. The portable radio communication device according to any one of the preceding claims, wherein said housing (12, 16) is completely made from aluminium, magnesium, titanium or alloys thereof.

5. The portable radio communication device according to any one of the preceding claims, wherein one or more shielding layers (122) are incorporated in said housing near electronic components (108) in order to protect the electronic components (108) against magnetic and electromagnetic influence or emittance of electromagnetic signals to the outside.

6. The portable radio communication device according to any one of the preceding claims, wherein sealing elements (120, 121) for providing high frequency shielding are provided near electronic components (108) inside said housing (12, 16).

7. The portable radio communication device according to any one of the preceding claims, wherein an opening of said housing is closed by an appropriate shielding plug (56) providing protection against electromagnetic influence from or emittance to the outside.

8. The portable radio communication device according to any one of the preceding claims, wherein said housing (12) comprises a sandwich structure with an inner casing (90; 135), an outer casing (68; 136) and at least one intermediate chassis (122).

9. The portable radio communication device according to claim 9, wherein said inner casing (135) and/or said outer casing (136) are interconnected with the intermediate chassis (122) by a flexible locking mechanism, said intermediate chassis (122) comprising at least one aperture (122a) containing a flexible portion (123) and said inner and/or outer casings comprising a at least one respective extending part (136b) to be inserted and pushed into said aperture (122a) and at the same time pivoting the inner and/or outer casings against the intermediate chassis (122) such that a locking protrusion (122b) on the intermediate chassis (122) may be positioned in a corresponding locking aperture (136b) on the inner and/or outer casings.

## Patentansprüche

1. Tragbares Funkkommunikationsgerät, wie etwa ein tragbares Telefon (10), das eine Antenne (40), einen Sprachsender (76), einen Sprachempfänger (110), eine Tastatur (26) und eine Anzeigeeinrichtung (50) aufweist, wobei das Funkkommunikationsgerät weiter umfasst:
ein Gehäuse mit mindestens einem ersten Gehäuseteil (12), das die Tastatur (26) und den Sprachempfänger (110) umschließt, und einem zweiten Gehäuseteil (16), das den Sprachsender (110) und die Anzeigeeinrichtung (50) umschließt, wobei das erste (12) und zweite Gehäuseteil (16) rotierbar über ein Gelenk (14) miteinander verbunden sind, so daß die Gehäuseteile von einer Ruhestellung, in der sich die Gehäuseteile im wesentlichen einander überdecken, in eine Betriebsstellung, in denen die Gehäuseteile einen Winkel β definieren, bewegt werden können,
wobei:
das gesamte Gehäuse (12, 16) vollständig aus einem elektrisch leitfähigen Material hergestellt ist, und
die Antenne an dem ersten Gehäuseteil (12) angeordnet ist, so dass, wenn die Gehäuseteile (12, 16) in die Betriebsstellung bewegt sind, die Antenne (40) hinter dem zweiten Gehäuseteil (16) angeordnet ist, und das Gelenk (14) zwei Kopplungselemente (104) aufweist, die jeweils ein elastisches Distanzstück (102) und einen Zapfen (100) umfassen, der in dem jeweiligen Kopplungselement (104) aufgenommen ist und somit einen Reibungsdruck zwischen den Zapfen und dem zweiten Gehäuseteil (16) bewirkt, der es dem zweiten Gehäuseteil (16) ermöglicht, in jedem Winkel β zwischen der Ruhe- und der Betriebsstellung fixiert zu werden, wobei die Antenne (40) einen Winkel α in einem Bereich von 5° bis 15°, 15° bis 25°, 25° bis 30°, 35° bis 45°, 45° bis 55° oder 55° bis 65° mit dem zweiten Gehäuseteil (16) bildet, und wobei die Antenne (40) und das gesamte Gehäuse, das als Reflexionselement fungiert, ein vorbestimmtes Empfangs- und Abstrahlungsmuster des Funkkommunikationsgerätes bereitstellt, wobei die auf den Kopf des Benutzers einwirkende elektromagnetische Strahlung mit abnehmenden Winkel α reduzierbar ist.

2. Tragbares Funkkommunikationsgerät nach Anspruch 1, wobei die Eingabeeinrichtung (26) durch das zweite Gehäuseteil (16) abgedeckt und geschützt ist, wenn die Gehäuseteile sich in der Ruhestellung befinden.

3. Tragbares Funkkommunikationsgerät nach Anspruch 1, wobei das Gehäuse eine Schutzschicht (58) auf seiner Außenfläche umfasst, wobei die Schutzschicht (58) aus einem elektrisch leitfähigen synthetischen Harz insbesondere mit Silizium oder Kohlenstoff verstärktem Gummi hergestellt ist.

4. Tragbares Funkkommunikationsgerät nach einem der vorangehenden Ansprüche, wobei das Gehäuse (12, 16) vollständig aus Aluminium, Magnesium, Titan oder Legierungen daraus hergestellt ist.

5. Tragbares Funkkommunikationsgerät nach einem der vorangehenden Ansprüche, wobei eine oder mehrere Abschirmschichten (122) in dem Gehäuse in der Nähe der elektronischen Komponenten (108) enthalten sind, um die elektronischen Komponenten (108) gegen magnetischen und elektromagnetischen Einfluss oder gegen eine Abstrahlung der elektromagnetischen Signale nach außen zu schützen.

6. Tragbares Funkkommunikationsgerät nach einem der vorangehenden Ansprüche, wobei Abschirmelemente (120, 121) zum Bereitstellen einer Hochfrequenzabschirmung in der Nähe der elektronischen Komponenten (108) in den Gehäusen (12, 16) vorgesehen sind.

7. Tragbares Funkkommunikationsgerät nach einem der vorangehenden Ansprüche, wobei eine Öffnung in dem Gehäuse durch einen geeigneten Abschirmzapfen (56) verschlossen ist, der einen Schutz vor elektromagnetischen Einfluss von außen oder vor einer Strahlung nach außen bereitstellt.

8. Tragbares Funkkommunikationsgerät nach einem der vorangehenden Ansprüche, wobei das Gehäuse (12) eine Verbundstruktur mit einem Innengehäuse (90; 135), einem Außengehäuse (68; 136) und mindestens einem Zwischengehäuse (122) aufweist.

9. Tragbares Funkkommunikationsgerät nach Anspruch 9, wobei das Innengehäuse (135) und/oder das Außengehäuse (136) mit dem Zwischengehäuse (122) über einen flexiblen Sperrmechanismus verbunden sind, wobei das Zwischengehäuse (122) mindestens eine Öffnung (122a) aufweist, die einen flexiblen Abschnitt (123) enthält, und das Innengehäuse und/oder das Außengehäuse jeweils mindestens einen Vorsprungsabschnitt (136b) aufweisen, der in die Öffnung (122a) eingesetzt und hinein gedrückt wird und gleichzeitig das Innengehäuse und/oder das Außengehäuse gegen das Zwischengehäuse (122) so verschwenkt, dass ein Sperrvorsprung (122b) an dem Zwischengehäuse (122) in einer entsprechenden Sperrausnehmung (136b) an dem Innengehäuse und/oder Außengehäuse positioniert wird.

## Revendications

1. Appareil de radiocommunication mobile, tel qu'un téléphone mobile (10) comprenant une antenne (40), un émetteur vocal (76), un récepteur vocal (110), un clavier de téléphone (26) et des moyens d'affichage (50), ledit appareil de radiocommunication comprenant en outre :
un boîtier comprenant au moins une première partie du boîtier (12), qui loge le clavier de téléphone (26) et les moyens de récepteur vocal (110), et une seconde partie du boîtier (16), qui loge l'émetteur vocal (110) et les moyens d'affichage (50), dans lequel la première (12) et la seconde (16) partie du boîtier sont connectées de façon rotative l'une à travers l'autre par le biais d'une charnière (14) permettant auxdites parties du boîtier de se déplacer depuis une position de repos dans laquelle lesdites parties du boîtier sont recouvertes l'une sur l'autre de façon basique et vers une position de fonctionnement dans laquelle lesdites parties du boîtier définissent un angle β,
dans lequel :
l'ensemble du boîtier (12, 16) est entièrement réalisé à partir d'un matériau électriquement conducteur, et
ladite antenne (40) est située au niveau de ladite première partie du boîtier (12) de telle sorte que, lorsque lesdites parties du boîtier (12, 16) passent dans la position de fonctionnement, l'antenne (40) est placée derrière ladite seconde partie du boîtier (16), et ladite charnière (14) comprend deux raccordements (104), chacun ayant une bague d'écartement élastique (102) et une fiche (100) insérée à l'intérieur du raccordement respectif (104) fournissant ainsi une pression de frottement entre les fiches et la seconde partie du boîtier (16) permettant à la seconde partie du boîtier (16) d'être fixée dans un angle β quelconque entre les positions de repos et de fonctionnement, l'antenne (40) forme un angle α dans une gamme comprise entre 5°et 15°, 15° et 25°, 25° et 35°, 35° et 45°, 45° et 55° ou 55° et 65° avec ladite seconde partie du boîtier (16) et l'antenne (40) et le boîtier entier, agissant comme un élément de réflexion, fournissent une configuration prédéterminée de réception et de rayonnement de l'appareil de radiocommunication, dans lequel le rayonnement électromagnétique incident vers la tête de l'utilisateur peut être réduite avec l'angle de réduction α.

2. Appareil de radiocommunication mobile selon la revendication 1, dans lequel lesdits moyens d'entrée (26) sont recouverts et protégés par ladite seconde partie du boîtier (16) lorsque lesdites parties du boîtier sont dans ladite position de repos.

3. Appareil de radiocommunication mobile selon la revendication 1, dans lequel ledit boîtier comprend une couche protectrice (58) sur sa surface extérieure, ladite couche protectrice (58) est faite à partir d'une résine synthétique électriquement conductrice, tel que le caoutchouc renforcé au carbone ou au silicium.

4. Appareil de radiocommunication mobile selon l'une quelconque des revendications précédentes, dans lequel ledit boîtier (12, 16) est entièrement réalisé à partir d'aluminium, de magnésium, de titane ou d'alliages de ces derniers.

5. Appareil de radiocommunication mobile selon l'une quelconque des revendications précédentes, dans lequel une ou plusieurs couches de blindage (122) sont incorporées dans ledit boîtier près des composants électroniques (108) afin de protéger les composants électroniques (108) contre l'influence magnétique et électromagnétique ou l'émission de signaux électromagnétiques vers l'extérieur.

6. Appareil de radiocommunication mobile selon l'une quelconque des revendications précédentes, dans lequel les éléments isolants (120, 121) pour fournir un blindage haute fréquence sont fournis près des composants électroniques (108) à l'intérieur dudit boîtier (12, 16).

7. Appareil de radiocommunication mobile selon l'une quelconque des revendications précédentes, dans lequel une ouverture dudit boîtier est fermée par une fiche de blindage appropriée (56) fournissant une protection contre l'influence électromagnétique de l'extérieur ou l'émission vers l'extérieur.

8. Appareil de radiocommunication mobile selon l'une quelconque des revendications précédentes, dans lequel ledit boîtier (12) comprend une structure en sandwich avec une enveloppe interne (90 ; 135), une enveloppe externe (68 ; 136) et au moins un châssis intermédiaire (122).

9. Appareil de radiocommunication mobile selon la revendication 9, dans lequel ladite enveloppe interne (135) et/ou ladite enveloppe externe (136) sont interconnectées avec le châssis intermédiaire (122) par un mécanisme de verrouillage flexible, ledit châssis intermédiaire (122) comprenant au moins une ouverture (122a) contenant une partie flexible (123) et lesdites enveloppes interne et/ou externe comprenant au moins une partie d'extension respective (136b) à insérer et à pousser dans ladite ouverture (122a) et en même temps en faisant pivoter les enveloppes interne et/ou externe contre le châssis intermédiaire (122) de telle sorte qu'une protubérance de verrouillage (122b) sur le châssis intermédiaire (122) peut être positionnée dans une ouverture de verrouillage correspondante (136b) sur les enveloppes interne et/ou externe.
